# EUROPEAN PATENT SPECIFICATION

(11) **EP 4 490 878 B1**
(45) Date of publication and mention of the grant of the patent: **26.08.2026**
(21) Application number: 23767664.8
(22) Date of filing: 08.03.2023
(51) Int. Cl.: H04L 9/32, G06Q 20/32, G06Q 20/38, G06Q 20/40

(54) **TOKEN ACTIVATION DURING AUTHORIZATION**
TOKENAKTIVIERUNG WÄHREND DER AUTORISIERUNG
ACTIVATION DE JETON PENDANT UNE AUTORISATION

(30) Priority: 11.03.2022 US 202263319219 P
(43) Date of publication of application: 15.01.2025
(73) Proprietor: Visa International Service Association, San Francisco, California 94128 (US)
(72) Inventor: JACOBS, Jan, San Francisco, California 94128 (US); HAENLEIN, Brandon, San Francisco, California 94128 (US)
(74) Representative: EIP
(86) International application number: PCT/US2023/063984
(87) International publication number: WO 2023/172980

(56) References cited:
- WO-A1-2021/222780
- CN-A- 110 462 663
- KR-A- 20220 010 701
- US-A1- 2020 296 093
- US-A1- 2021 233 066
- US-A1- 2021 295 332
- US-A1- 2021 320 922
- US-A1- 2021 320 922

## Description

### BACKGROUND

Tokens can be used as substitutes for real credentials to obtain resources. However, tokenization systems cannot keep up with tokenization demands from token requestors. The number of tokens that have been generated in the recent years are in the billions, and this trend is predicted to continue.

An existing tokenization model requires tokens to be created and activated before the first use of the token. This results in multiple interactions between a token service provider and authorizing entities when the token is requested by a token requestor. Also, the infrastructure needed to create and activate tokens in-line between the token service provider and authorizing entities is expensive.

Another problem that needs to be addressed is that tokens can be provided to token requestors and activated, but then they are not used. In fact, a substantial number of card on file (CoF) tokens do not see any authorization requests during their lifespan, meaning that they are generated and activated but are never used in a transaction. This is problematic since such tokens may burden the tokenization system and may use token numbers that could otherwise be actively used.

Embodiments of the disclosure address this problem and other problems individually and collectively.

US 2021/0320922 A1 discusses a method and system for provisioning credentials. The method includes receiving, by a token provider computer, a token request message from a token requestor computer that comprises an initial access identifier. The token provider computer transmits the initial access identifier to a first authorization computer, and then the token provider computer receives an intermediate access identifier. The token provider computer then transmits a token activation request message to a second authorization computer based at least in part on the intermediate access identifier. The token provider computer then receives a token activation response message from the second authorization computer. The token provider computer then provides the token to the token requestor computer.

CN 110462663 discusses a system and method for pre-supplying a token for a first device. The application on the second device can be used to link the token on the first device to any real credential. Because the second device can be used to maintain the token, the first device can be a "dumb" device and the second device can be a "smart" device. The real credential can be changed and updated on the second device, so that the same token is linked to different real credential at different times. An identifier may be assigned to the first device, and the identifier may be stored in a token library in association with the token supplied to the first device. The user can use the identifier to register and activate the token with the application on the second device.

WO 2021/222780 A1 discusses systems and methods for token-for- token provisioning. A server computer can receive a message from a second token requestor. The message can include a request for a second token and can include a first token or the message can include a cryptogram request message. The server computer can transmit a provisioning request message to an authorizing entity computer requesting an authentication of a credential and receive a provisioning response message from the authorizing entity computer authenticating the credential. Any of the server computer or the authorizing entity computer can generate the second token. The server computer can provide the second token to a second token requestor for use in a recurring transaction. The first token and the second token can both be associated with a credential.

### SUMMARY

Aspects of the invention are defined by the claims.

One embodiment of the invention includes a method. The method comprises: receiving, by a token service computer from a token requestor computer, a request to obtain a token; and providing, by the token service computer, a token request message to a token vault computer, wherein the token vault computer obtains the token, and receives a request to activate the token after the token is used to initiate a transaction.

Another embodiment of the invention includes a token service computer comprising: a processor; and a computer readable medium comprising code, executable by the processor, for performing the method. Another embodiment includes a computer program product comprising instructions which, when the program is executed by a token service computer, causes the token service computer to perform the method.

### BRIEF DESCRIPTION OF THE DRAWINGS

FIG. 1 shows a system and a flow diagram illustrating a method using an ISO integrated authorization entity according to an embodiment of the invention.
FIG. 2 shows a system and a flow diagram illustrating a method using a web service integrated authorization entity according to an embodiment of the invention.
FIG. 3 shows a block diagram of a token service computer according to some embodiments.
FIG. 4 shows a block diagram of a processing network computer according to some embodiments.
FIG. 5 shows a block diagram of a token vault computer according to some embodiments.
FIG. 6 shows a block diagram of a resource provider computer according to some embodiments.

### DETAILED DESCRIPTION

Prior to discussing embodiments of the disclosure, some terms can be described in further detail.

A "resource provider" may be an entity that can provide a resource such as goods, services, information, and/or access to a location (e.g., a parking space, a transit terminal, etc.). Examples of resource providers include merchants, governmental authorities, secure data providers, etc. A resource provider may operate one or more access devices.

A "resource provider computer" can be a computer operated by a resource provider. An example of a resource provider computer can be an access device.

An "access device" may be any suitable device that provides access to a resource. An access device may be in any suitable form. Some examples of access devices include vending machines, kiosks, POS or point of sale devices (e.g., POS terminals), cellular phones, PDAs, personal computers (PCs), tablet PCs, hand-held specialized readers, set-top boxes, electronic cash registers (ECRs), automated teller machines (ATMs), virtual cash registers (VCRs), Web servers, and the like. An access device may use any suitable contact or contactless mode of operation to send or receive data from, or associated with, a user mobile communication device. In some embodiments, an access device may include a reader, a processor, and a computer-readable medium. A reader may include any suitable contact or contactless mode of operation. For example, exemplary readers can include radio frequency (RF) antennas, optical scanners, bar code readers, or magnetic stripe readers to interact with a payment device and/or mobile communication device.

"Access data" may include any suitable data that can be used to access a resource or create data that can access a resource. In some embodiments, access data may be account information for a payment account. Account information may include a PAN, payment token, expiration date, card verification values (e.g., CVV, CVV2), dynamic card verification values (dCVV, dCVV2), an identifier of an issuer with which an account is held, etc. In other embodiments, access data could include data that can be used to access a location or to access secure data. Such information may be ticket information for an event, data to access a building, transit ticket information, passwords, biometrics or other credentials to access secure data, etc.

An "authorizing entity" may be an entity that authorizes a request. Examples of an authorizing entity may be an issuer, a governmental agency, a document repository, an access administrator, etc. An authorizing entity may operate an authorizing entity computer. An "issuer" may refer to a business entity (e.g., a bank) that issues and optionally maintains an account for a user. An issuer may also issue payment credentials stored on a user device, such as a cellular telephone, smart card, tablet, or laptop to the consumer.

An "acquirer" may typically be a business entity (e.g., a commercial bank) that has a business relationship with a particular merchant or other entity. Some entities can perform both issuer and acquirer functions. Some embodiments may encompass such single entity issuer-acquirers. An acquirer may operate an acquirer computer, which can also be generically referred to as a "transport computer."

A "processor" may refer to any suitable data computation device or devices. A processor may comprise one or more microprocessors working together to accomplish a desired function. The processor may include a CPU comprising at least one high-speed data processor adequate to execute program components for executing user and/or system-generated requests. The CPU may be a microprocessor such as AMD's Athlon, Duron and/or Opteron; IBM and/or Motorola's PowerPC; IBM's and Sony's Cell processor; Intel's Celeron, Itanium, Pentium, Xeon, and/or XScale; and/or the like processor(s).

A "memory" may be any suitable device or devices that can store electronic data. A suitable memory may comprise a non-transitory computer readable medium that stores instructions that can be executed by a processor to implement a desired method. Examples of memories may comprise one or more memory chips, disk drives, etc. Such memories may operate using any suitable electrical, optical, and/or magnetic mode of operation.

A "mobile communication device" may comprise any suitable electronic device that may be transported and operated by a user, which may also optionally provide remote communication capabilities to a network. Examples of remote communication capabilities include using a mobile phone (wireless) network, wireless data network (*e.g.,* 3G, 4G or similar networks), Wi-Fi, Bluetooth, Bluetooth Low Energy (BLE), Wi-Max, or any other communication medium that may provide access to a network such as the Internet or a private network. Examples of mobile communication devices include mobile phones (*e.g.,* cellular phones), PDAs, tablet computers, net books, laptop computers, wearable devices (e.g., watches), vehicles such as automobiles and motorcycles, personal music players, hand-held specialized readers, etc. A mobile communication device may comprise any suitable hardware and software for performing such functions, and may also include multiple devices or components (*e.g.,* when a device has remote access to a network by tethering to another device - *i.e.,* using the other device as a modem - both devices taken together may be considered a single mobile communication device).

A "user" may include an individual. In some embodiments, a user may be associated with one or more personal accounts and/or user devices.

A "credential" may be any suitable information that serves as reliable evidence of worth, ownership, identity, or authority. A credential may be a string of numbers, letters, or any other suitable characters that may be present or contained in any object or document that can serve as confirmation.

A "value credential" may be information associated with worth. Examples of value credentials include payment credentials, coupon identifiers, information needed to obtain a promotional offer, etc.

"Payment credentials" may include any suitable information associated with an account (e.g., a payment account and/or payment device associated with the account). Such information may be directly related to the account or may be derived from information related to the account. Examples of account information may include a PAN (primary account number or "account number"), username, expiration date, CVV (card verification value), dCVV (dynamic card verification value), CVV2 (card verification value 2), CVC3 card verification values, etc. CVV2 is generally understood to be a static verification value associated with a payment device. CVV2 values are generally visible to a user (e.g., a consumer), whereas CVV and dCVV values are typically embedded in memory or authorization request messages and are not readily known to the user (although they are known to the issuer and payment processors). Payment credentials may be any information that identifies or is associated with a payment account. Payment credentials may be provided in order to make a payment from a payment account. Payment credentials can also include a username, an expiration date, a gift card number or code, and any other suitable information.

A "token" may be a substitute value for a credential. A token may be a string of numbers, letters, or any other suitable characters. Examples of tokens include access tokens such as payment tokens, data that can be used to access secure systems or locations, etc.

A "payment token" may include an identifier for a payment account that is a substitute for an account identifier, such as a primary account number (PAN) and/or an expiration date. For example, a token may include a series of alphanumeric characters that may be used as a substitute for an original account identifier. For example, a token "4900 0000 0000 0001" may be used in place of a PAN "4147 0900 0000 1234." In some embodiments, a token may be "format preserving" and may have a numeric format that conforms to the account identifiers used in existing transaction processing networks (e.g., ISO 8583 financial transaction message format). In some embodiments, a token may be used in place of a PAN to initiate, authorize, settle or resolve a payment transaction or represent the original credential in other systems where the original credential would typically be provided. In some embodiments, a token value may be generated such that the recovery of the original PAN or other account identifier from the token value may not be computationally derived. Further, in some embodiments, the token format may be configured to allow the entity receiving the token to identify it as a token and recognize the entity that issued the token.

"Tokenization" is a process by which sensitive data is replaced with substitute data. For example, a real credential (e.g., a primary account number (PAN)) may be tokenized by replacing the real account identifier with a substitute number that may be associated with the real credential. Further, tokenization can be applied to any other information to substitute the underlying information with a token. "Token exchange" or "de-tokenization" can be a process of restoring the data that was substituted during tokenization. For example, a token exchange may include replacing a payment token with its associated primary account number (PAN). Further, de-tokenization or token exchange may be applied to any other information to retrieve the substituted information from a token. In some embodiments, token exchange can be achieved via a transactional message, such as an ISO message, an application programming interface (API), or another type of web interface (e.g., web request).

A "token service computer" can include a system that that services tokens. In some embodiments, a token service computer can facilitate requesting, determining (e.g., generating) and/or issuing tokens, as well as maintaining an established mapping of tokens to primary account numbers (PANs) in a repository (e.g., token vault). In some embodiments, the token service computer may establish a token assurance level for a given token to indicate the confidence level of the token to PAN binding. The token service computer may include or be in communication with a token vault where the generated tokens are stored. The token service computer may support token processing of payment transactions submitted using tokens by de-tokenizing the token to obtain the actual PAN.

A "token domain" may indicate an area and/or circumstance in which a token can be used. Examples of the token domain may include, but are not limited to, payment channels (e.g., e-commerce, physical point of sale, etc.), POS entry modes (e.g., contactless, magnetic stripe, etc.), and merchant identifiers to uniquely identify where the token can be used. A set of parameters (i.e., token domain restriction controls) may be established as part of token issuance by the token service computer that may allow for enforcing appropriate usage of the token in payment transactions. For example, the token domain restriction controls may restrict the use of the token with particular presentment modes, such as contactless or e-commerce presentment modes. In some embodiments, the token domain restriction controls may restrict the use of the token at a particular merchant that can be uniquely identified. Some exemplary token domain restriction controls may require the verification of the presence of a token cryptogram that is unique to a given transaction. In some embodiments, a token domain can be associated with a token requestor.

"Token expiry date" may refer to the expiration date/time of the token. The token expiry date may be passed among the entities of the tokenization ecosystem during transaction processing to ensure interoperability. The token expiration date may be a numeric value (e.g., a 4-digit numeric value). In some embodiments, the token expiry date can be expressed as a time duration as measured from the time of issuance.

A "token request message" may be an electronic message for requesting a token. A token request message may include information usable for identifying a payment account or digital wallet, and/or information for generating a payment token. For example, a token request message may include payment credentials, mobile communication device identification information (e.g., a phone number or MSISDN), a digital wallet identifier, information identifying a tokenization service provider, a merchant identifier, a cryptogram, and/or any other suitable information. Information included in a token request message can be encrypted (e.g., with an issuer-specific key). In some embodiments, the token request message may include a flag or other indicator specifying that the message is a token request message.

A "token response message" may be a message that responds to a token request. A token response message may include an indication that a token request was approved or denied. A token response message may also include a payment token, mobile communication device identification information (e.g., a phone number or MSISDN), a digital wallet identifier, information identifying a tokenization service provider, a merchant identifier, a cryptogram, and/or any other suitable information. Information included in a token response message can be encrypted (e.g., with an issuer-specific key). In some embodiments, the token response message may include a flag or other indicator specifying that the message is a token response message.

An "authorization request message" may be a message that requests permission to conduct an interaction. For example, an authorization request message may include an electronic message that is sent to a payment processing network and/or an issuer of a payment card to request authorization for a transaction. An authorization request message according to some embodiments may comply with (International Organization of Standardization) ISO 8583, which is a standard for systems that exchange electronic transaction information associated with a payment made by a consumer using a payment device or payment account. The authorization request message may include an issuer account identifier that may be associated with a payment device or payment account. An authorization request message may also comprise additional data elements corresponding to "identification information" including, by way of example only: a service code, a CVV (card verification value), a dCVV (dynamic card verification value), an expiration date, etc. An authorization request message may also comprise "transaction information," such as any information associated with a current transaction, such as the transaction amount, merchant identifier, merchant location, etc., as well as any other information that may be utilized in determining whether to identify and/or authorize a transaction.

An "authorization response message" may be an electronic message reply to an authorization request message. In some embodiments, it may be generated by an issuing financial institution or a payment processing network. The authorization response message may include, by way of example only, one or more of the following status indicators: Approval -- transaction was approved; Declinetransaction was not approved; or Call Center -- response pending more information, merchant must call the toll-free authorization phone number. The authorization response message may also include an authorization code, which may be a code that a credit card issuing bank returns in response to an authorization request message in an electronic message (either directly or through the payment processing network) to the merchant's access device (e.g., POS equipment) that indicates approval of the transaction. The code may serve as proof of authorization. As noted above, in some embodiments, a payment processing network may generate or forward the authorization response message to the merchant.

A "server computer" may include a powerful computer or cluster of computers. For example, the server computer can be a large mainframe, a minicomputer cluster, or a group of servers functioning as a unit. In one example, the server computer may be a database server coupled to a Web server. The server computer may comprise one or more computational apparatuses and may use any of a variety of computing structures, arrangements, and compilations for servicing the requests from one or more client computers. A server computer can be a cloud computer.

Current tokenization models require tokens to be created and activated before the first use of the token. When creating and activating a token in existing systems, there can be at least three interactions (via API calls) between a token service system and authorizing entity computer (e.g., an issuer computer). The first interaction can verify the token requestor's eligibility. The second interaction can verify the token activation request. The third interaction can involve relaying activated token details to the authorizing entity computer.

The current tokenization model that requires tokens to be created and activated before first use of the token is inefficient. In fact, a majority of card on file tokens are activated, but are never used by the token requestors that request them. In one example, a user may activate an account for a streaming service to take advantage of free trial period provided by the streaming service. To use the streaming service during the trial period, a payment card number is required to create an account. After the streaming service receives the payment card number, it can tokenize it for future use. However, if the user opts out of the streaming service after the trial period, then the token has been generated and activated, but it was never used to conduct a payment transaction.

In order to solve these problems, using embodiments of the invention, tokens such as card on file tokens can be created in a "pending" state, where token activation with authorizing entity computer is deferred until the time that the tokens are used for authorizing transactions. This reduces the number of interactions between a token service computer and an authorizing entity computer relative to conventional systems. It also only activates tokens if they are used to conduct transactions. Tokens that are not activated within a certain period of time can be reused or reissued, thereby addressing the problems regarding the proliferation of tokens.

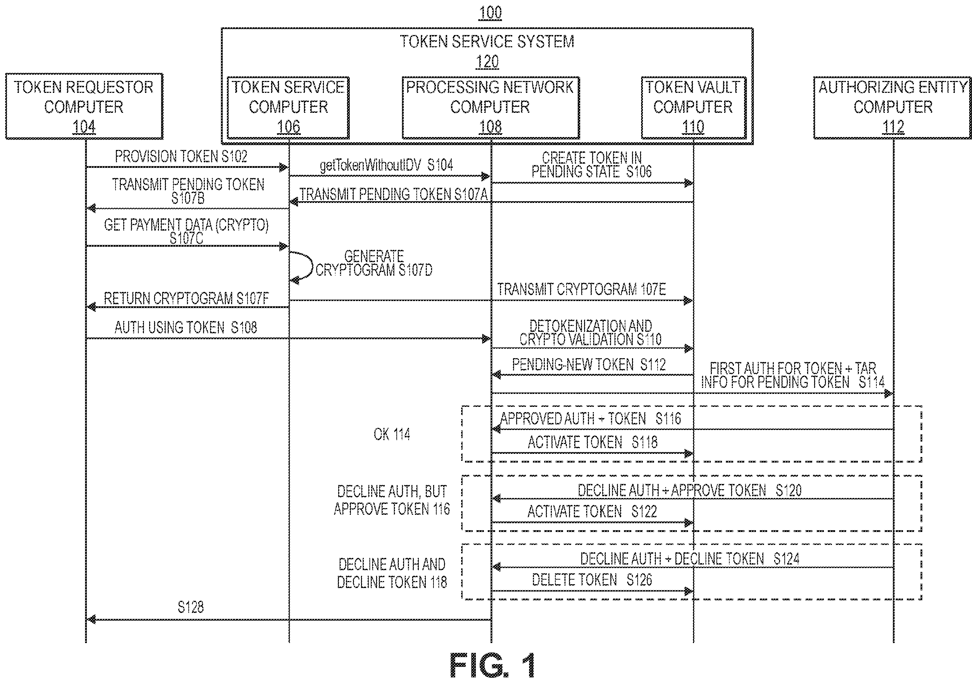

FIG. 1 shows a flow diagram illustrating a method for an ISO integrated authorization entity according to an embodiment of the invention. FIG. 1 shows a token requestor computer 104, an authorizing entity computer 112, and a token service system 120. The token service system 120 comprises a token service computer 106, a processing network computer 108, and a token vault computer 110. In some embodiments, the token requestor computer 104 can be a resource provider (e.g., merchant) computer that conducts recurring transactions (e.g., the submission of authorization request messages for payments for monthly charges). The authorizing entity computer 112 can be in communication with the processing network computer 108 to authorize activation of the token. In the method of FIG. 1, the authorizing entity computer 112 can perform token activation authorization using ISO messages (e.g., ISO 8583 messages).

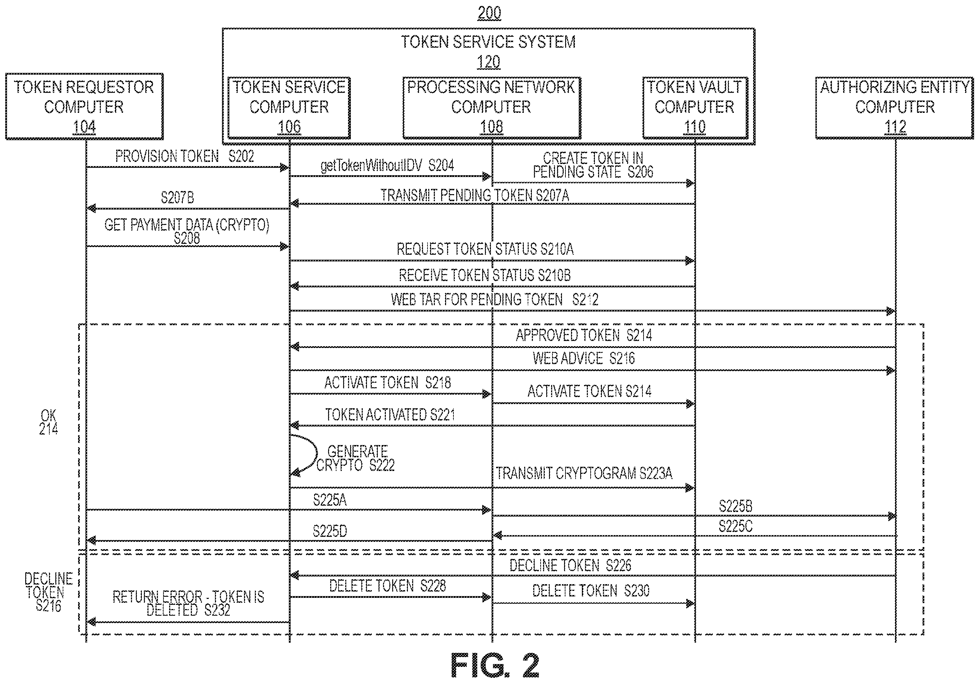

Each of the entities in FIG. 1 (or FIG. 2) may communicate through any suitable communication channel or communications network. A suitable communications network may be any one and/or the combination of the following: a direct interconnection; the Internet; a Local Area Network (LAN); a Metropolitan Area Network (MAN); an Operating Missions as Nodes on the Internet (OMNI); a secured custom connection; a Wide Area Network (WAN); a wireless network (e.g., employing protocols such as, but not limited to a Wireless Application Protocol (WAP), I-mode, and/or the like); and/or the like.

In a method that can be described with respect to FIG. 1, until the token requestor computer 104 sends an authorization request message in a transaction to the processing network computer 108, the token can be in a pending state and is not activated by the processing network computer 108. Once the token requestor computer 104 sends the authorization request message comprising the token to the processing network computer 108, the processing network computer 108 can substitute the token with credential and send it to an authorizing entity computer 112. The authorizing entity computer 112, upon receiving the authorization request message, can transmit an authorization response message to the processing network computer 108. The authorization response message can 1) authorize the transaction and token activation request, 2) decline the transaction, but approve of token activation request, or 3) decline the transaction and the token activation request.

In step S102, the token requestor computer 104 can transmit a token request message to obtain a token in response to a user's desire to interact with the token requestor computer 104. The token requestor computer 104 can be a resource provider computer, a user device such as a mobile phone, or any other suitable device that requests a token.

The token request message can comprise information such as a credential (e.g., primary account number), a CVV2, an expiration date, etc. to the token service computer 106. The token requestor computer 104 may have received the payment information from a user wishing to obtain a resource (e.g., streaming service) provided by the token requestor computer 104. In some cases, the user may not need to initiate a payment transaction to access the resource provided by the token requestor computer 104, but still provide the payment information to the token requestor computer 104 to access the resource. For example, the user may provide its payment information to the token requestor computer 104 to access streaming content provided by the token requestor computer 104 during a free trial period.

In step S104, upon receiving the request to obtain a token, the token service computer 106 can provide the token request message to the processing network computer 108.

In step S106, the processing network computer 108 can transmit the token request message to the token vault computer 110. The token vault computer 110, upon receiving the token request message, can obtain a token. For example, the token can be mathematically derived from the credential or it may be retrieved from a database and assigned to the credential. The token can be a substitute for the credential, and the token and the credential can have a same format (e.g., 16 digit primary account number). The token vault computer 110 may store the token in a pending state until the token is activated by the token vault computer 110.

In step S107A, the token vault computer 110, upon obtaining the token, can transmit the token to the token service computer 106. In some embodiments, the token vault computer 110 may transmit the token to the processing network computer 108 before transmitting it to the token service computer 106. In some other embodiments, the token vault computer 110 can transmit both the credential and the token to the token service computer 106.

In step S107B, the token service computer 106 can provide the token to the token requestor computer 104. At this time, the token is still in the pending state as it has not been yet activated. A token that is "pending" can be one that has been created, but cannot be used in a transaction authorization process. A token that is "activated" can be one that can be used in a transaction authorization process.

In step S107C, the user may perform a transaction to obtain access to the resource. The resource can be a recurring resource. For example, after an initial free trial period for a streaming service, the user may decide to keep access the streaming service by paying a monthly fee. The token requestor computer 104, upon the user deciding to perform the transaction, can transmit a request for a cryptogram to the token service computer 106. The request for a cryptogram can comprise the token and transaction data such as time, merchant information, transaction mode, category of the item, etc.

In step S107D, the token service computer 106, upon receiving the request for a cryptogram, can obtain a cryptogram. In some embodiments, the cryptogram can be generated by the token service computer 106. For example, the cryptogram can be derived from the credential associated with the token and/or the token, and the transaction data. For example, if the token requestor computer 104 performs an online transaction with the merchant 102, then a cryptogram that encodes (e.g., encrypts) an e-commerce transaction indicator, a resource provider identifier, dynamic information such as a time and date, and a token can be generated by the token service computer 106. The cryptogram can be used to validate that a token is being used in an authorized manner. For example, a cryptogram can encode an e-commerce transaction indicator. If a token that accompanies the cryptogram is used in a transaction that is not an e-commerce transaction, then that transaction may be declined since the token is not being using in an authorized manner.

In step S107E, the token service computer 106 can transmit the token and the cryptogram to the token vault computer 110 to store the cryptogram in the token vault computer 110. The token vault computer 110 can find a matching token stored in its database and store the cryptogram with the token.

In step S107F, the token service computer 106 can transmit the cryptogram back to the token requestor computer 104.

In step S108, the token requestor computer 104 can initiate the transaction by generating an authorization request message comprising the token (which is in a pending state) and the cryptogram to the processing network computer 108. Upon generating the authorization request message, the token requestor computer 104 can send the authorization request message to the processing network computer 108 for authorization of the transaction.

In steps S110 and S112, upon receiving the authorization request message comprising the token and the cryptogram, the processing network computer 108 can detokenize the token into the credential and validate the cryptogram through the token vault computer 110.

In step S110, the processing network computer 108 can transmit a detokenization request comprising the token and the cryptogram to the token vault computer 110. The token vault computer 110, upon receiving the detokenization request, can use the token to obtain a cryptogram associated with the token. In some embodiments, the cryptogram can be obtained from a database and validate the cryptogram by comparing it to the received cryptogram. Upon successful validation, the token vault computer 110 can detokenize the token to obtain the credential associated with the token. In some embodiments, the credential may be mathematically determined from the token. In other embodiments, the credential may be retrieved from a database which links credentials to tokens.

In step S112, the token vault computer 110 can transmit the credential associated with the token to the processing network computer 108. The processing network computer 108 can substitute the credential from the token in the authorization request message. Since the token is in the pending state and is not yet activated, the processing network computer 108 can communicate with the authorizing entity computer 112 to activate the token.

In step S114, the processing network computer 108 can transmit the authorization request message comprising the credential associated with the token in the pending state, token activation information, and optionally the token to the authorizing entity computer 112 for approval. The token activation information can comprise a token activation request and token details or advice information. In some embodiments, authorization request message may be an ISO message such as an ISO 8583 message.

In some embodiments, the authorizing entity computer 112, upon receiving the authorization request message comprising the credential associated with the token, token activation information, and optionally the token, has one of three options. The first option 114 approves the transaction and token activation request. The second option 116 declines the transaction but approves of the token activation request. The third option 118 declines both the transaction and the token activation request.

In step S116, the authorizing entity computer 112 can review the authorization request message and determine if the transaction is approved or not. The authorizing entity computer 112 can determine if there are sufficient funds in the account associated with the credential to conduct the transaction and/or perform any suitable number of fraud and security checks.

The authorizing entity computer 112 can then generate an authorization response message. The authorization response message can comprise the credential, an activation indicator approving of both the transaction and the token activation request, and optionally the token. The authorizing entity computer 112 can then transmit the authorization response message to the processing network computer 108.

In step S118, the processing network computer 108, upon receiving the authorization response message, can transmit a request to activate the token to the token vault computer 110. Token vault computer 110, upon receiving the request to activate the token, can activate the token to an active state in response to receiving the request to activate the token. The token vault computer 110 may change the token status to activated upon activating the token. The token vault computer 110 may store a flag along with the token, where the flat indicates that the token is activated.

In step S120, the authorizing entity computer 112 can review the authorization request message and generate an authorization response message. The authorization response message can comprise the credential, an activation indicator declining the transaction but approving the token activation request, and optionally the token. An example scenario may be that the user does not have any balance left in the account but the account has otherwise been in good standing, so the activation of the token can be approved. The authorizing entity computer 112 can transmit the authorization response message to the processing network computer 108.

In step S122, the processing network computer 108, upon receiving the authorization response message, can transmit a request to activate the token to the token vault computer 110. Token vault computer 110, upon receiving the request to activate the token, can activate the token to an active state in response to receiving the request to activate the token. The token vault computer 110 may change the token status to activated upon activating the token.

In step S124, the authorizing entity computer 112 can review the authorization request message and generate an authorization response message. The authorization response message can comprise the credential, an activation indicator declining both the transaction and the token activation request, and optionally the token. The authorizing entity computer 112 can transmit the authorization response message to the processing network computer 108.

In step S126, the processing network computer 108, upon receiving the authorization response message, can transmit a token deletion message to the token vault computer 110. Token vault computer 110, upon receiving the token deletion message, can delete the token in its database.

In step S128, the processing network computer 108 can transmit an authorization response message with the token and the activation indicator to the token requestor computer 104. The token requestor computer 104, by receiving the authorization response message, can be notified whether the transaction is approved or declined, and whether the token is activated or not.

FIG. 2 shows a flow diagram illustrating a method that uses a web service integrated authorization entity computer according to an embodiment of the invention. In FIG. 2, the authorizing entity computer 112 is not capable of receiving ISO message to activate tokens, but instead uses Web services to activate tokens. The process of activating the token can take place using non-ISO messages such as HTTP/HTTPs messages.

FIG. 2 shows a token requestor computer 104, an authorizing entity computer 112, and a token service system 120 comprising a token service computer 106, a processing network computer 108, and a token vault computer 110. The authorizing entity computer 112 can be in communication with the processing network computer 108 to activate the token. The token requestor computer 104 can be a resource provider (e.g., merchant) computer that provides a recurring response (e.g., monthly streaming fee).

In FIG. 2, until the token requestor computer 104 sends a request for a cryptogram to the token service computer 106, the token may be in a pending state and may not yet be activated. Once the token requestor computer 104 sends the request for a cryptogram, the token service computer 106 can interact with an authorizing entity computer 112 by sending a request to activate the token to the authorizing entity computer 112. The authorizing entity computer 112, upon receiving the request to active the token, can transmit a response to the token service computer 106 that 1) approves the token activation request; or 2) declines the token activation request.

Steps S202 to S207B can be similar to steps S102 to S107B. A user may provide payment information comprising credential (e.g., primary account number), CVV2, etc. to the token requestor computer 104 to access a resource (e.g., streaming service). Although the user may have provided the payment information, the user may not need to perform a transaction yet to access the resource. For example, the user may provide its payment information to the token requestor computer 104 to access a free trial period for a streaming service. The token requestor computer 104 can send token request message to the token service computer 106. The token service computer 106 can then provide the token request message to the token vault computer 110. The token vault computer 110 can obtain a token, store the token in a pending state, and send the token back to the token requestor computer 104.

In step S208, the user can initiate the transaction to obtaining access to a resource. The resource can be a recurring resource that requires a recurring payment to continue. For example, the recurring resource can be video content provided by a streaming service. After an initial free trial period for the streaming service, the user may decide to keep accessing the content provided by the streaming service by paying a monthly fee. The initiation of the transaction can include the token requestor computer 104 transmitting a request for a cryptogram for the transaction using the token to the token service computer 106. The request for the cryptogram can comprise the token and transaction data such as time, merchant information, category of the item, etc., to the token service computer 106.

In step S210A, after receiving the token cryptogram request, the token service computer 106 can look up a status of the token. The token service computer 106 can look up the token status by transmitting a request for the token status to the token vault computer 110. The token vault computer 110, upon receiving the request for the token status, can find the token status of the token.

In step S210B, the token vault computer 110 can transmit the token status of the token to the token service computer 106. The token vault computer 110 can additionally transmit the corresponding credential of the token. The token vault computer 110 may determine that the token is in a pending state or is in an active state. If the token is in the pending state, the token service computer 106 can proceed with activating the token in step S212. If the token is already activated, the token service computer can proceed to step S222.

In step S212, the token service computer 106 can transmit a request for approval to activate the token to an authorizing entity computer 112. The request can comprise comprising the credential and the token, and can be in a data format (e.g., HTTP/HTTPs) that is different than an authorization request message (e.g., an ISO 8583). The authorizing entity computer 112, upon receiving the request to activate the token, can review the token activation request. In some embodiments, the authorizing entity computer 112 may have two options. The first option 214 is to approve the token activation request. The second option 216 is to decline the token activation request.

In step S214, the token service computer 106 can receive a response with an approval to activate the token from the authorizing entity computer 112. For example, the authorizing entity computer 112 may determine that the account associated with the credential associated with the token has a sufficient balance and/or that the credential is otherwise in good standing. The authorizing entity computer 112 can then send a response with approval to activate the token.

In step S216, the token service computer 106 can transmit the details or advice of the token to the authorizing entity computer 112. The details or advice can include details about the token activation including the time and date of activation, the token that was activated, the credential that corresponds to the token, and a digital signature of the token service computer 106.

In steps S218 and S220, a request to activate the token can be sent from the token service computer 106 to the processing network computer 108, and from the processing network computer 108 to the token vault computer 110.

In step S220, the token vault computer 110, upon receiving the request to activate the token, can activate the token in response to receiving the request to activate the token. The token vault computer 110 may change the token status to activated upon activating the token.

In step S221, upon activating the token, the token vault computer 110 may notify the token service computer 106 that the token is now activated.

In step S222, upon receiving the notification that the token is now activated, the token service computer 106 can generate a cryptogram. The cryptogram can be derived from the credential associated with the token and/or the token, and the transaction data. For example, if the token requestor computer 104 performs an online transaction with the merchant 102, then a cryptogram that encodes an E-commerce transaction indicator, the token, the transaction amount, and a resource provider computer identifier, can be generated by the token service computer 106.

In step S223A, upon generating the cryptogram, the token service computer 106 can send the token and the cryptogram to the token vault computer 110. The token vault computer 110 can find a matching token stored in its database and store the cryptogram with the token.

In step S224, the token service computer 106 can send the cryptogram back to the token requestor computer 104.

In step S225A, upon receiving the cryptogram, the token requestor computer 104 can transmit an authorization request message comprising the token, the cryptogram, and a transaction amount to the processing network computer 108. The processing network computer 108 can detokenize the token to obtain the credential associated with the token and validate the token cryptogram by communicating with the token vault computer 110 (steps not shown but similar to steps S110 and S112 of FIG. 1).

In step S225B, upon a successful validation of the token cryptogram, the processing network computer 108 can transmit the authorization request message comprising the credential, the transaction amount, and optionally the token to the authorizing entity computer 112. In step S225C, the authorizing entity computer 112 can send an authorization response message to the processing network computer 108 that approves or declines the transaction. In step S225D, the processing network computer 108 sends the authorization response message to the token requestor computer 104.

In step S226, the token service computer 106 can receive a response with declining to activate the token from the authorizing entity computer. For example, the authorizing entity computer 112 may determine that the account associated with the credential associated with the token does not a sufficient balance and/or raises other issues of concern, and can decline the token activation request.

In step S228, upon receiving the response including the indication that token activation is declined, the token service computer 106 can send a request to delete the token to the processing network computer 108.

In step S230, the processing network computer 108 can send the request to delete the token to the token vault computer 110. The token vault computer 110, upon receiving the request to delete the token, can delete the provisioned token.

In step S230, the token service computer 106 can send an error message of token being deleted to the token requestor computer 104. Since the token is deleted, the transaction therefore may be declined, and the authorization steps may not proceed.

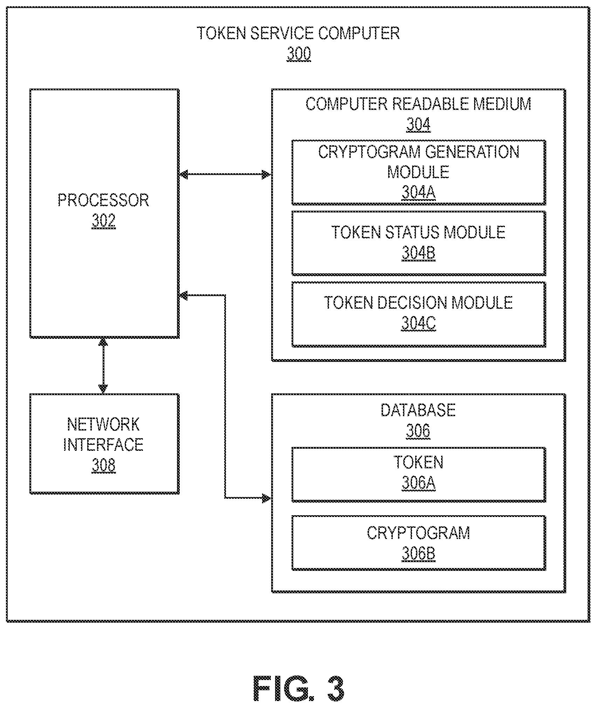

FIG. 3 shows a block diagram of a token service computer 300 according to an embodiment. The token service computer 300 may comprise a processor 302, which may be coupled to a computer readable medium 304, database 306, and a network interface 308.

The network interface 308 may include an interface that can allow the token service computer 300 to communicate with external computers. The network interface 308 may enable the token service computer 300 to communicate data to and from another device (e.g., a card, an item provider computer, etc.). Some examples of the network interface 308 may include a modem, a physical network interface (such as an Ethernet card or other Network Interface Card (NIC)), a virtual network interface, a communications port, a Personal Computer Memory Card International Association (PCMCIA) slot and card, or the like. The wireless protocols enabled by the network interface 308 may include Wi-Fi^{™}. Data transferred via the network interface 308 may be in the form of signals which may be electrical, electromagnetic, optical, or any other signal capable of being received by the external communications interface (collectively referred to as "electronic signals" or "electronic messages"). These electronic messages that may comprise data or instructions may be provided between the network interface 308 and other devices via a communications path or channel. As noted above, any suitable communication path or channel may be used such as, for instance, a wire or cable, fiber optics, a telephone line, a cellular link, a radio frequency (RF) link, a WAN or LAN network, the Internet, or any other suitable medium.

The computer readable medium 304 may comprise a number of software modules including a cryptogram generation module 304A, a token status module 304B, and a token decision module 304C.

The cryptogram generation module 304A may comprise code that can cause the processor 302 to generate a cryptogram 306B upon receiving a request for a cryptogram or after receiving a notification of a token 306A in transaction being activated. The cryptogram can be generated by using the token 306A and transaction data 306C. The token status module 304B and the processor 302 may identify a status of the token 306A. The token status module 304B and the processor 302 can identify the status of the token 306A by generating a request for the token status and transmitting the request for the token status to the token vault computer 500. The token service computer 300 can then receive a response with the status of the token back from the token vault computer 500. The token decision module 304C may comprise code that can cause the processor 302 to either send a request to activate the token or delete the token to a processing network computer 400. The token decision module 304C can base its decision on whether a response it receives from an authorizing entity computer is an approval to activate the token or declining to activate the token.

The computer readable medium 304 can also comprise code, executable by the processor 302, for performing operations comprising: receiving, from a token requestor computer, a request to obtain a token; and providing, a token request message to a token vault computer, wherein the token vault computer obtains the token,and receives a request to activate the token after the token is used to initiate a transaction.

The database 306 may comprise tokens 306A, cryptograms 306B, and the transaction data 306C. Tokens and cryptograms are described above. The transaction data 306C can be data used in the transaction. The transaction data 306C can comprise time of the transaction, merchant information, category of the item in the transaction, etc. The transaction data 306C may be received from a token requestor computer 600.

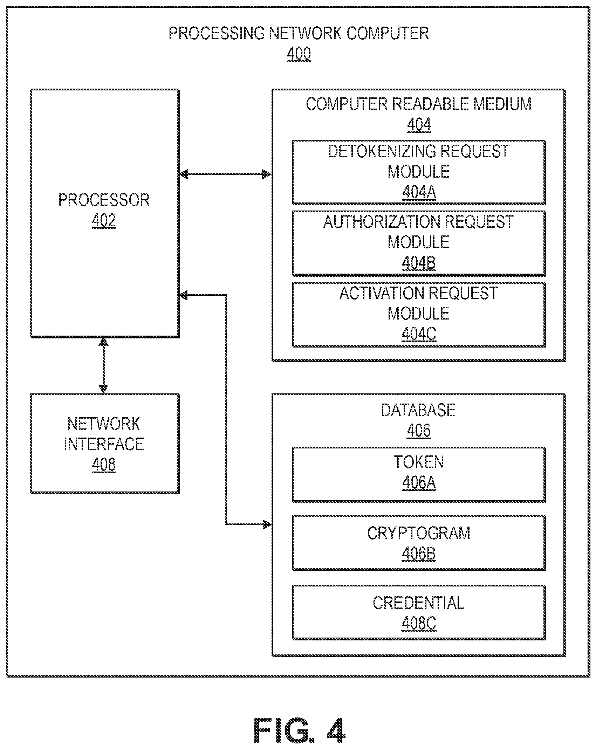

FIG. 4 shows a block diagram of a processing network computer 400 according to an embodiment. The processing network computer 400 may comprise a processor 402, which may be coupled to a computer readable medium 404, database 406, and a network interface 408.

The network interface 408 may include an interface that has similar or different characteristics as the network interface 308 in FIG. 3 and the description therein is incorporated herein.

The computer readable medium 404 may comprise a number of software modules including a detokenization request module 404A, an authorization module 404B, and an activation request module 404C.

The detokenization request module 404A may comprise code that can cause the processor 402 to generate a request to detokenize a token 406A and transmit the request to a token vault computer 500. The request can comprise at least the token 406A and a cryptogram 406B. The processing network computer 400 may then obtain a credential 406C associated with the token 406A from the token vault computer. The authorization module 404B and the processor 402 can process authorization requests and responses. The activation request module 404C may comprise code that can cause the processor 402 to either send a request to activate the token or delete the token to the token vault computer 500.

The database 406 may comprise tokens 406A, cryptograms 406B associated with the tokens 406A, and credentials 406C associated with the tokens 406A, as well as other information.

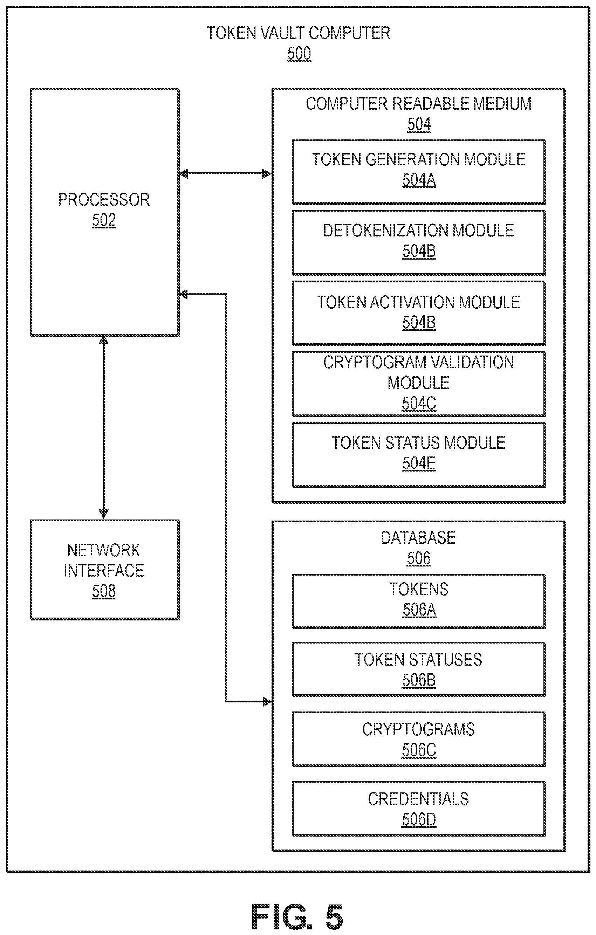

FIG. 5 shows a block diagram of a token vault computer 500 according to an embodiment. The token vault computer 500 may comprise a processor 502, which may be coupled to a computer readable medium 504, database 506, and a network interface 508.

The network interface 508 may include an interface that has similar or different characteristics as the network interface 308 in FIG. 3 and the description therein is incorporated herein.

The computer readable medium 504 may comprise a number of software modules including a token generation module 504A, a detokenization module 504B, a token activation module 504C, a cryptogram validation module 504D, and a token status module 504E.

The token generation module 504A may comprise code that can cause the processor 502 to generate a token 506A using payment information including a credential 506D of a user. The token generation module 504A can obtain the token 506A and store the token 506A and the credential associated with the token in the database 506. The detokenization module 504B and the processor 502 can validate the cryptogram by comparing a received cryptogram with the cryptogram 506C in the database 506. Upon successful validation, the detokenization module 504B can detokenize the token in the detokenization request. It can do so by matching the received token with the token 506A in the database 506, and the obtaining the credential 506D associated with the token 506A. The token activation module 504C may comprise code that can cause the processor 502 to either activate the token or delete the token. The token status module 504E can comprise code that can cause the processor 502 to check on the token status of the token 506A.

The database 506 may comprise tokens 506A, token statuses 506B (e.g., activated, pending, inactive), cryptograms 506C, and credentials 506D.

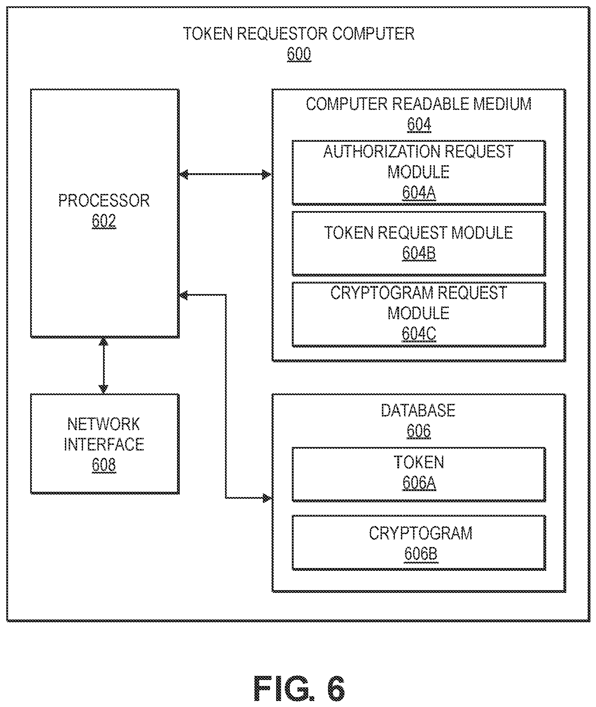

FIG. 6 shows a block diagram of a token requestor computer 600 according to an embodiment. The token requestor computer 600 may comprise a processor 602, which may be coupled to a computer readable medium 604, database 606, and a network interface 608.

The network interface 608 may include an interface that has similar or different characteristics as the network interface 308 in FIG. 3 and the description therein is incorporated herein.

The computer readable medium 604 may comprise a number of software modules including an authorization request module 604A, a token request module 604B, and a cryptogram request module 604C.

The authorization request module 604A can comprise code executable by the processor 602 to cause the token requestor computer 600 to generate and transmit authorization request messages, and receive and process authorization response messages. The token request module 604B may comprise code that can cause the processor 602 to generate a request to obtain a token 606A. The request may include payment information. The cryptogram request module 604C may comprise code that can cause the processor 602 to generate a request for a cryptogram 606B. The cryptogram request module 604C may comprise code that can cause the processor 602 to request cryptograms associated with tokens.

The database 606 may comprise tokens 606A and cryptograms 606B, and metadata thereof.

Embodiments of the invention have number of advantages. One advantage of the embodiment is that the token activation is deferred to authorization time. By doing this, the interaction between the token service system and the authorizing entity computer is deferred until the first authorization request message. Tokens are only activated when they are used, this reducing the need to create and/or maintain unnecessary tokens. Further, the number of messages needed to activate tokens is reduced relative to conventional systems.

Any of the software components or functions described in this application may be implemented as software code to be executed by a processor using any suitable computer language such as, for example, Java, C, C++, C#, Objective-C, Swift, or scripting language such as Perl or Python using, for example, conventional or object-oriented techniques. The software code may be stored as a series of instructions or commands on a computer readable medium for storage and/or transmission, suitable media include random access memory (RAM), a read only memory (ROM), a magnetic medium such as a hard-drive or a floppy disk, or an optical medium such as a compact disk (CD) or DVD (digital versatile disk), flash memory, and the like. The computer readable medium may be any combination of such storage or transmission devices.

Such programs may also be encoded and transmitted using carrier signals adapted for transmission via wired, optical, and/or wireless networks conforming to a variety of protocols, including the Internet. As such, a computer readable medium according to an embodiment of the present invention may be created using a data signal encoded with such programs. Computer readable media encoded with the program code may be packaged with a compatible device or provided separately from other devices (e.g., via Internet download). Any such computer readable medium may reside on or within a single computer product (e.g., a hard drive, a CD, or an entire computer system), and may be present on or within different computer products within a system or network. A computer system may include a monitor, printer, or other suitable display for providing any of the results mentioned herein to a user.

## Claims

1. A method comprising:
receiving (S102, S202), by a token service computer (106, 300) from a token requestor computer (104, 600), a request to obtain a token; and
providing (S104, S106, S204, S206), by the token service computer, a token request message to a token vault computer (110, 500), wherein the token vault computer obtains the token, and receives (S122, S220) a request to activate the token after the token is used to initiate a transaction.

2. The method of claim 1, wherein the request to activate the token is received by the token vault computer from a processing network computer (108, 400) after a first authorization request message comprising the token is received (S108) by the processing network computer in the transaction and after a second authorization request message is received (S114) by an authorizing entity computer (112), wherein the second authorization request message is derived from the first authorization request message by substituting the token with a credential associated with the token.

3. The method of claim 1, the initiation of the transaction including the token requestor computer requesting a cryptogram for the transaction using the token.

4. The method of any preceding claim, wherein the request to activate the token is received by the token vault computer from a processing network computer after an authorization request message is sent (S114) by the processing network computer to an authorizing entity computer (112) and after an authorization response message (S116) is received by the processing network computer from the authorizing entity computer.

5. The method of any preceding claim, wherein the transaction is for obtaining access to a resource, and the resource is a recurring resource.

6. The method of any preceding claim, wherein the token vault computer stores the token in a pending state until the token is activated by the token vault computer.

7. The method of any preceding claim, wherein the token vault computer activates the token in response to receiving the request to activate the token.

8. The method of any one of claims 1, 3, or 5-7, wherein the request to activate the token is received by the token vault computer after the token is used to initiate the transaction, the initiation of the transaction including the token requestor computer requesting a cryptogram for the transaction using the token from the token service computer, and wherein the method further comprises:
looking up (S210) a status of the token;
determining that the token is in a pending state;
transmitting (S212) a request to an authorizing entity computer for approval to activate the token; and
receiving (S214) from the authorizing entity computer, a response with approval to activate the token.

9. The method of claim 8, further comprising:
activating the token;
generating the cryptogram; and
transmitting the cryptogram to the token requestor computer.

10. The method of claim 9, wherein the cryptogram is derived from a credential associated with the token.

11. The method of any preceding claim, wherein the token is a substitute for a credential, and the token and the credential have a same format.

12. The method of any one of claims 1-7 or 11, wherein the request to activate the token is received by the token vault computer from a processing network computer, after an authorization request message comprising the token in a pending state is received by the processing network computer in the transaction initiated by the token requestor computer, and wherein the method further comprises:
detokenizing (S110), by the processing network computer, the token into a credential;
substituting (S112) the credential in the authorization request message;
transmitting (S114) the authorization request message with the credential to an authorizing entity computer for approval;
receiving (S120) an authorization response message comprising the credential from the authorizing entity computer; and
activating (S122) the token to an active state after receiving the authorization response message.

13. The method of claim 12, further comprising:
transmitting (S128) the authorization response message with the token and an activation indicator in the authorization response message to the token requestor computer.

14. A system comprising: a token service computer (300) comprising: a processor (302); and a computer readable medium (304) comprising code executable by the processor for performing the method of claim 1; and a token vault computer (110, 500), wherein the token vault computer obtains the token, and receives a request to activate the token after the token is used to initiate a transaction.

15. A computer program product comprising instructions which, when the program is executed by the processor of the token service computer of the system of claim 14, cause the token service computer to: receive (S102, S202), from a token requestor computer (104, 600), a request to obtain a token; and provide (S104, S106, S204, S206) a token request message to the token vault computer (110, 500).

## Patentansprüche

1. Verfahren, umfassend:
Empfangen (S102, S202) einer Anforderung zum Erhalten eines Tokens durch einen Tokenservicecomputer (106, 300) von einem Token-Anforderer-Computer (104, 600); und
Bereitstellen (S104, S106, S204, S206) einer Tokenanforderungsnachricht an einen Token-Vault-Computer (110, 500) durch den Token-Service-Computer, wobei der Token-Vault-Computer das Token erhält und eine Anforderung zum Aktivieren des Tokens empfängt (S122, S220), nachdem das Token verwendet wurde, um eine Transaktion zu initiieren.

2. Verfahren nach Anspruch 1, wobei die Anforderung zum Aktivieren des Tokens durch den Token-Vault-Computer von einem Verarbeitungsnetzwerkcomputer (108, 400) empfangen wird, nachdem eine erste Autorisierungsanforderungsnachricht, die das Token umfasst, von dem Verarbeitungsnetzwerkcomputer in der Transaktion empfangen wurde (S108), und nachdem eine zweite Autorisierungsanforderungsnachricht von einem Autorisierungseinheitscomputer (112) empfangen wurde (S114), wobei die zweite Autorisierungsanforderungsnachricht von der ersten Autorisierungsanforderungsnachricht abgeleitet wird, indem das Token durch einen dem Token zugeordneten Berechtigungsnachweis ersetzt wird.

3. Verfahren nach Anspruch 1, wobei die Initiierung der Transaktion umfasst, dass der Token-Anforderer-Computer ein Kryptogramm für die Transaktion unter Verwendung des Tokens anfordert.

4. Verfahren nach einem der vorhergehenden Ansprüche, wobei die Anforderung zum Aktivieren des Tokens von dem Token-Vault-Computer von einem Verarbeitungsnetzwerkcomputer empfangen wird, nachdem eine Autorisierungsanforderungsnachricht von dem Verarbeitungsnetzwerkcomputer an einen Autorisierungseinheitscomputer (112) gesendet wird (S114) und nachdem eine Autorisierungsantwortnachricht (S116) von dem Verarbeitungsnetzwerkcomputer von dem Autorisierungseinheitscomputer empfangen wird.

5. Verfahren nach einem der vorhergehenden Ansprüche, wobei die Transaktion zum Erhalten von Zugriff auf eine Ressource dient und die Ressource eine wiederkehrende Ressource ist.

6. Verfahren nach einem der vorhergehenden Ansprüche, wobei der Token-Vault-Computer das Token in einem ausstehenden Zustand speichert, bis das Token durch den Token-Vault-Computer aktiviert wird.

7. Verfahren nach einem der vorhergehenden Ansprüche, wobei der Token-Vault-Computer das Token in Reaktion auf den Empfang der Anforderung zum Aktivieren des Tokens aktiviert.

8. Verfahren nach einem der Ansprüche 1, 3 oder 5 bis 7, wobei die Anforderung zum Aktivieren des Tokens durch den Token-Vault-Computer empfangen wird, nachdem das Token verwendet wurde, um die Transaktion zu initiieren, wobei die Initiierung der Transaktion den Token-Anforderer-Computer beinhaltet, der unter Verwendung des Tokens vom Token-Service-Computer ein Kryptogramm für die Transaktion anfordert, und wobei das Verfahren ferner Folgendes umfasst:
Nachschlagen (S210) eines Status des Tokens;
Bestimmen, dass sich das Token in einem ausstehenden Zustand befindet;
Übertragen (S212) einer Anforderung an einen Autorisierungseinheitscomputer zur Genehmigung, das Token zu aktivieren; und
Empfangen (S214) einer Antwort mit Genehmigung zur Aktivierung des Tokens vom Autorisierungseinheitscomputer.

9. Verfahren nach Anspruch 8, ferner umfassend: Aktivieren des Tokens;
Erzeugen des Kryptogramms; und Übertragen des Kryptogramms an den Token-Anforderer-Computer.

10. Verfahren nach Anspruch 9, wobei das Kryptogramm von einem Berechtigungsnachweis abgeleitet ist, die mit dem Token verknüpft ist.

11. Verfahren nach einem der vorhergehenden Ansprüche, wobei das Token ein Ersatz für einen Berechtigungsnachweis ist und das Token und der Berechtigungsnachweis ein gleiches Format haben.

12. Verfahren nach einem der Ansprüche 1 bis 7 oder 11, wobei die Anforderung zum Aktivieren des Tokens durch den Token-Vault-Computer von einem Verarbeitungsnetzwerkcomputer empfangen wird, nachdem eine Autorisierungsanforderungsnachricht, die das Token in einem ausstehenden Zustand umfasst, durch den Verarbeitungsnetzwerkcomputer in der durch den Token-Anforderer-Computer initiierten Transaktion empfangen wird, und wobei das Verfahren ferner Folgendes umfasst:
Detokenisieren (S110) des Tokens durch den Verarbeitungsnetzwerkcomputer in einen Berechtigungsnachweis;
Ersetzen (S112) des Berechtigungsnachweises in der Autorisierungsanforderungsnachricht;
Übertragen (S114) der Autorisierungsanforderungsnachricht mit dem Berechtigungsnachweis an einen Autorisierungseinheitscomputer;
Empfangen (S120) der Autorisierungsantwortnachricht einschließlich des Berechtigungsnachweises von dem Autorisierungseinheitscomputer; und
Aktivieren (S122) des Tokens in einen aktiven Zustand nach dem Empfangen der Autorisierungsantwortnachricht.

13. Verfahren nach Anspruch 12, ferner umfassend:
Übertragen (S128) der Autorisierungsantwortnachricht mit dem Token und einem Aktivierungsindikator in der Autorisierungsantwortnachricht an den Token-Anforderer-Computer.

14. System mit: einem Tokenservicecomputer (300), der Folgendes aufweist: einen Prozessor (302); und ein computerlesbares Medium (304), das einen durch den Prozessor ausführbaren Code zum Durchführen des Verfahrens nach Anspruch 1 aufweist; und einen Token-Vault-Computer (110, 500), wobei der Token-Vault-Computer das Token erhält und eine Anforderung zum Aktivieren des Tokens empfängt, nachdem das Token verwendet wurde, um eine Transaktion zu initiieren.

15. Computerprogrammprodukt, das Anweisungen umfasst, die, wenn das Programm durch den Prozessor des Token-Service-Computers des Systems nach Anspruch 14 ausgeführt wird, den Token-Service-Computer zu Folgendem veranlassen: von einem Token-Anforderer-Computer (104, 600) eine Anforderung zum Erhalten eines Tokens zu empfangen (S102, S202); und dem Token-Vault-Computer (110, 500) eine Tokenanforderungsnachricht bereitzustellen (S104, S106, S204, S206) .

## Revendications

1. Procédé comprenant :
la réception (S102, S202), par un ordinateur de service de jeton (106, 300) depuis un ordinateur demandeur de jeton (104, 600), d'une demande pour obtenir un jeton ; et
la fourniture (S104, S106, S204, S206), par l'ordinateur de service de jeton, d'un message de demande de jeton à un ordinateur de coffre-fort de jetons (110, 500), dans lequel l'ordinateur de coffre-fort de jetons obtient le jeton, et reçoit (S122, S220) une demande pour activer le jeton après que le jeton est utilisé pour lancer une transaction.

2. Procédé selon la revendication 1, dans lequel la demande d'activation du jeton est reçue par l'ordinateur de coffre-fort de jetons à partir d'un ordinateur de réseau de traitement (108, 400) après qu'un premier message de demande d'autorisation comprenant le jeton est reçu (S108) par l'ordinateur de réseau de traitement dans la transaction et après qu'un deuxième message de demande d'autorisation est reçu (S114) par un ordinateur d'entité d'autorisation (112), dans lequel le deuxième message de demande d'autorisation est dérivé du premier message de demande d'autorisation en substituant le jeton par un authentifiant associé au jeton.

3. Procédé selon la revendication 1, le lancement de la transaction comportant la demande, par l'ordinateur demandeur de jeton, d'un cryptogramme pour la transaction en utilisant le jeton.

4. Procédé selon une quelconque revendication précédente, dans lequel la demande d'activation du jeton est reçue par l'ordinateur de coffre-fort de jetons en provenance d'un ordinateur de réseau de traitement après qu'un message de demande d'autorisation est envoyé (S114) par l'ordinateur de réseau de traitement à un ordinateur d'entité d'autorisation (112) et après qu'un message de réponse d'autorisation (S116) est reçu par l'ordinateur de réseau de traitement depuis l'ordinateur d'entité d'autorisation.

5. Procédé selon une quelconque revendication précédente, dans lequel la transaction est destinée à obtenir l'accès à une ressource, et la ressource est une ressource récurrente.

6. Procédé selon une quelconque revendication précédente, dans lequel l'ordinateur de coffre-fort de jetons stocke le jeton dans un état d'attente jusqu'à ce que le jeton soit activé par l'ordinateur de coffre-fort de jetons.

7. Procédé selon une quelconque revendication précédente, dans lequel l'ordinateur de coffre-fort de jetons active le jeton en réponse à la réception de la demande d'activation du jeton.

8. Procédé selon l'une quelconque des revendications 1, 3 ou 5 à 7, dans lequel la demande d'activation du jeton est reçue par l'ordinateur de coffre-fort de jetons après que le jeton a été utilisé pour lancer la transaction, le lancement de la transaction comportant l'ordinateur demandeur de jeton demandant un cryptogramme pour la transaction en utilisant le jeton à partir de l'ordinateur de service de jeton, et dans lequel le procédé comprend en outre :
la consultation (S210) d'un état du jeton ;
la détermination que le jeton est dans un état d'attente ;
la transmission (S212) d'une demande à un ordinateur d'entité d'autorisation pour approbation afin d'activer le jeton ; et
la réception (S214) depuis l'ordinateur d'entité d'autorisation, d'une réponse avec approbation afin d'activer le jeton.

9. Procédé selon la revendication 8, comprenant en outre :
l'activation du jeton ;
la génération du cryptogramme ; et
la transmission du cryptogramme à l'ordinateur demandeur de jeton.

10. Procédé selon la revendication 9, dans lequel le cryptogramme est dérivé à partir d'un authentifiant associé au jeton.

11. Procédé selon une quelconque revendication précédente, dans lequel le jeton est un substitut d'un authentifiant, et le jeton et l'authentifiant ont un même format.

12. Procédé selon l'une quelconque des revendications 1 à 7 ou 11, dans lequel la demande d'activation du jeton est reçue par l'ordinateur de coffre-fort de jetons à partir d'un ordinateur de réseau de traitement, après qu'un message de demande d'autorisation comprenant le jeton dans un état d'attente est reçu par l'ordinateur de réseau de traitement dans la transaction lancée par l'ordinateur demandeur de jeton, et dans lequel le procédé comprend en outre :
la détokénisation (S110), par l'ordinateur de réseau de traitement, du jeton en un authentifiant ;
la substitution (S112) de l'authentifiant dans le message de demande d'autorisation ;
la transmission (S114) du message de demande d'autorisation avec l'authentifiant à un ordinateur d'entité d'autorisation pour approbation ;
la réception (S120) du message de réponse d'autorisation comprenant l'authentifiant depuis l'ordinateur d'entité d'autorisation ; et
l'activation (S122) du jeton à un état actif après réception du message de réponse d'autorisation.

13. Procédé selon la revendication 12, comprenant en outre :
la transmission (S128) du message de réponse d'autorisation avec le jeton et un indicateur d'activation dans le message de réponse d'autorisation à l'ordinateur demandeur de jeton.

14. Système comprenant : un ordinateur de service de jeton (300) comprenant : un processeur (302) ; et un support lisible par ordinateur (304) comprenant un code exécutable par le processeur pour réaliser le procédé selon la revendication 1 ; et un ordinateur de coffre-fort de jetons (110, 500), dans lequel l'ordinateur de coffre-fort de jetons obtient le jeton et reçoit une demande d'activation du jeton après que le jeton a été utilisé pour lancer une transaction.

15. Produit de programme informatique comprenant des instructions qui, lorsque le programme est exécuté par le processeur de l'ordinateur de service de jeton du système selon la revendication 14, amènent l'ordinateur de service de jeton à : recevoir (S102, S202), depuis un ordinateur demandeur de jeton (104, 600), une demande d'obtention d'un jeton ; et fournir (S104, S106, S204, S206) un message de demande de jeton à l'ordinateur de coffre-fort de jetons (110, 500).
